# FASCICULE DE BREVET EUROPEEN

(11) **EP 3 464 955 B1**
(45) Date de publication et mention de la délivrance du brevet: **23.09.2020**
(21) Numéro de dépôt: 17742468.6
(22) Date de dépôt: 06.06.2017
(51) Int. Cl.: F16H 57/08, F16H 1/28

(54) **PROCÉDÉ D'ASSEMBLAGE D'UN PORTE-SATELLITES**
VERFAHREN ZUR MONTAGE EINES PLANETENTRÄGERS
METHOD FOR ASSEMBLING A PLANET CARRIER

(30) Priorité: 07.06.2016 FR 1655203
(43) Date de publication de la demande: 10.04.2019
(73) Titulaire: Safran Transmission Systems, 92700 Colombes (FR)
(72) Inventeur: LEMOINE, Julie, 77550 Moissy-Cramayel (FR); BECK, Guillaume, Julien, 77550 Moissy-Cramayel (FR)
(74) Mandataire: Regimbeau
(86) Numéro de dépôt international: PCT/FR2017/051425
(87) Numéro de publication internationale: WO 2017/212166

(56) Documents cités:
- WO-A1-94/29614
- US-A1- 2013 023 378

## Description

### DOMAINE DE L'INVENTION

L'invention concerne le domaine des turbomachines, et plus particulièrement les réducteurs des turboréacteurs à double flux configurés pour introduire un rapport de réduction entre la vitesse de la soufflante et celle de la turbine basse pression.

### ARRIERE-PLAN TECHNOLOGIQUE

Un turboréacteur 1 à double flux comprend généralement, d'amont en aval dans le sens de l'écoulement des gaz, une soufflante 2 carénée et logée dans un carter de soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire.

L'espace d'écoulement primaire traverse un corps primaire comprenant un ou plusieurs étages de compresseurs, par exemple un compresseur basse pression 3a et un compresseur haute pression 3b, une chambre de combustion 4, un ou plusieurs étages de turbines, par exemple une turbine haute pression 5a et une turbine basse pression 5b, et une tuyère d'échappement des gaz.

Typiquement, la turbine haute pression 5a entraine en rotation le compresseur haute pression 3b par l'intermédiaire d'un premier arbre, dit arbre haute pression, tandis que la turbine basse pression 5b entraine en rotation le compresseur basse pression 3a et la soufflante 2 par l'intermédiaire d'un deuxième arbre 6, dit arbre basse pression. L'arbre basse pression 6 est généralement logé dans l'arbre haute pression.

Afin d'améliorer le rendement propulsif du turboréacteur 1 et de réduire sa consommation spécifique ainsi que le bruit émis par la soufflante 2, il a été proposé des turboréacteurs présentant un taux de dilution (« bypass ratio » en anglais, qui correspond au rapport entre le débit du flux secondaire (froid) et le débit du flux primaire (chaud, qui traverse le corps primaire)) élevé. Par taux de dilution élevé, on comprendra ici un taux de dilution supérieur à 10, par exemple compris entre 12 et 18.

Pour atteindre de tels taux de dilution, un rapport de réduction est introduit entre la vitesse de la soufflante 2 et celle de la turbine basse pression 5b, permettant ainsi d'optimiser indépendamment leur vitesse de rotation respective. Cela peut notamment être réalisé à l'aide d'un réducteur 10 tel qu'un mécanisme de réduction épicycloïdale ou planétaire, placé entre l'extrémité amont (par rapport au sens d'écoulement des gaz dans le turboréacteur 1) de l'arbre basse pression 6 et la soufflante 2. La soufflante 2 est alors entrainée par l'arbre basse pression 6 par l'intermédiaire du mécanisme de réduction et d'un arbre supplémentaire, dit arbre de soufflante 2, qui est fixé entre le mécanisme de réduction 10 et le disque de la soufflante 2.

On réduit ainsi la vitesse de rotation et le rapport de pression de la soufflante 2 (« fan pressure ratio » en anglais), ce qui permet d'augmenter la puissance extraite par la turbine basse pression 5b.

Un mécanisme de réduction 10 comprend habituellement :
- un pignon solaire 12, centré sur l'axe principal X du mécanisme de réduction 10, qui entraine l'arbre basse pression 6 (arbre d'entrée),
- une couronne, centrée sur l'axe principal X,
- des satellites 14, placés entre le pignon solaire 12 et la couronne, dont les dents coopèrent avec celles du pignon solaire 12 et de la couronne, et
- un porte-satellites 16, sur lequel sont montés les satellites 14, généralement par l'intermédiaire de paliers de satellites 15.

La couronne et l'axe des satellites 14 peuvent être fixes tandis que le porte-satellites 16 tourne autour de l'axe principal X du mécanisme de réduction 10 : on parle alors de mécanisme de réduction épicycloïdal. Dans ce cas, l'arbre de soufflante 2 (arbre de sortie) est généralement fixé sur le porte-satellites 16. En variante, le porte-satellites 16 peut être fixe, tandis que la couronne et les satellites 14 tournent autour d'un axe de révolution de révolution respectif : on parle alors de mécanisme de réduction 10 planétaire. Dans ce cas, l'arbre de soufflante 2 est généralement fixé sur la couronne.

Le porte-satellites peut être monobloc, ou en variante être en deux parties et comprendre une cage et un porte-cage connectés ensemble à l'aide d'axes de connexion qui sont frettés sur la cage. A cet effet, la cage comporte une série de montants répartis circonférentiellement autour de l'axe de révolution de la cage et comportant chacun un pontet interne et un pontet externe. Le pontet interne et le pontet externe sont séparés par un logement adapté pour recevoir un doigt associé du porte-cage. Le pontet interne, le pontet externe et le doigt comprennent chacun des orifices traversants coaxiaux qui s'étendent en regard lorsque la cage est montée sur le porte-cage. Afin de fixer la cage sur le porte-cage, un axe de connexion est introduit à travers ces orifices en étant fretté sur le pontet interne et le pontet externe de la cage. Une rotule est en outre interposée entre l'axe de connexion et les parois de l'orifice formé dans le doigt afin de découpler les déformations du porte-cage et de la cage.

Un porte-satellites en deux parties présente l'avantage de permettre des désalignements des axes des satellites assez faibles pour garantir le bon fonctionnement des engrènements. Toutefois, il s'avère que le démontage de la cage et du porte-cage est difficile à réaliser sans risquer d'endommager l'un au moins de ces éléments. En effet, l'extraction des axes de connexion afin de séparer la cage et le porte-cage requiert un effort d'extraction supérieur à 18 tonnes qui risque d'endommager le porte-satellites. Les dimensions du porte-satellites, et en particulier l'espace disponible entre la cage et le porte-cage, sont en outre très faibles voire insuffisants pour y placer les outillages conventionnels qui sont susceptible d'appliquer de tels efforts d'extraction.

Le document WO 2014/099087 décrit un procédé d'assemblage d'un mécanisme de réduction dans lequel on utilise un support unitaire comprenant un axe central qui comprend des parois espacées et des ouvertures espacées dans le sens de la circonférence ménagées sur une circonférence extérieure du support.

### RESUME DE L'INVENTION

Un objectif de l'invention est donc de permettre un montage d'un porte-satellites comprenant une cage et un porte-cage de manière précise et robuste malgré son hyperstatisme, qui soit plus simple à mettre en œuvre et ne nécessite pas des tolérances de fabrication aussi strictes que dans l'art antérieur.

Pour cela, l'invention propose un procédé de fabrication d'un porte-satellites, ledit porte-satellites présentant un axe de révolution et comprenant :
- une cage annulaire comprenant :
   - une série de montants répartis circonférentiellement autour de l'axe de révolution, chaque montant comprenant un pontet interne et un pontet externe dans chacun desquels est formé un orifice traversant,
   - des portées de palier définissant des alésages configurés pour recevoir un palier d'un satellite,
- un porte-cage annulaire comprenant :
   - une série de doigts axiaux répartis circonférentiellement autour de l'axe de révolution dans chacun desquels est formé un orifice traversant, chaque doigt axial étant configuré pour être logé entre le pontet interne et le pontet externe d'un montant de la cage,
   - un arbre coaxial avec l'axe de révolution et présentant au moins une portée de roulement, ledit arbre étant fixé sur le porte-cage, le procédé d'assemblage étant caractérisé en ce qu'il comprend les étapes suivantes :
- réaliser séparément la cage et le porte-cage en ménageant une surépaisseur au niveau de l'un des éléments suivants : l'orifice traversant du pontet interne et l'orifice traversant du pontet externe d'au moins un montant de la cage, ou l'orifice traversant d'au moins un doigt du porte-cage, et/ou au niveau de l'un des éléments suivants : au moins une portée de palier ou l'au moins une portée de roulement,
- assembler la cage et le porte-cage en plaçant chaque doigt axial du porte-cage entre un pontet interne et un pontet externe de la cage,
- positionner la cage par rapport au porte-cage et fixer ensemble la cage et le porte-cage de manière à réaliser un ensemble monobloc,
- déterminer une position d'au moins un axe de référence lié à la cage, au porte-cage et/ou à l'arbre et
- en tenant compte de la position de l'un au moins des axes de référence, usiner tout ou partir des surépaisseurs de manière à assurer un alignement entre les orifices traversants de chaque pontet interne et de chaque pontet externe avec l'orifice traversant du doigt axial associé d'une part, et/ou des portées de palier de la cage avec la portée de roulement d'autre part.

Certaines caractéristiques préférées mais non limitatives du procédé de fabrication sont les suivantes, prises individuellement ou en combinaison :
- au cours de l'étape de réalisation de la cage et du porte-cage, la surépaisseur est ménagée au niveau de l'orifice traversant du pontet interne et du pontet externe et/ou au niveau des portées de palier, l'orifice traversant des doigts axiaux et l'au moins une portée de roulement étant dépourvus de surépaisseur,
- les axes de référence comprennent un axe de révolution de l'orifice traversant d'au moins un doigt axial du porte-cage et/ou un axe de roulement, ledit axe de roulement étant défini comme un axe de symétrie de l'au moins une portée de roulement de l'arbre,
- l'axe de révolution et l'axe de roulement sont déterminés par métrologie tridimensionnelle de l'orifice traversant du doigt axial et de l'au moins une portée de roulement, respectivement, par exemple par palpage,
- la cage et le porte-cage comprennent chacun un alésage central, lesdits alésages centraux étant coaxiaux avec l'axe de révolution du porte-satellites, et dans lequel l'étape d'assemblage comprend une sous-étape au cours de laquelle la cage et le porte-cage sont positionnés de manière à aligner axialement et radialement leur alésage central et/ou à les indexer angulairement,
- l'étape d'assemblage de la cage et du porte-cage est réalisée par introduction d'un outillage dans l'alésage central de la cage et du porte-cage et fixation dudit outillage dans lesdits alésages centraux de manière à bloquer la cage et le porte-cage par rapport à un bâti fixe,
- l'outillage comprend : un premier support configuré pour être introduit avec ajustement dans l'alésage central du porte-cage et un deuxième support configuré pour être introduit avec ajustement dans l'alésage central de la cage, et dans lequel l'étape de positionnement et de fixation de la cage et du porte-cage comprend les sous-étapes suivantes : (i) déterminer les dimensions de l'alésage central de la cage et de l'alésage central du porte-cage, (ii) usiner le premier support et le deuxième support en fonction des dimensions déterminées de l'alésage central de la cage et du porte-cage de manière à assurer un assemblage ajusté desdits supports avec l'alésage central correspondant, (iii) introduire le premier support et le deuxième support dans l'alésage central du porte-cage et dans l'alésage central de la cage, respectivement, et (iv) bloquer la cage et le porte-cage de manière à les rendre monobloc en fixant le premier support par rapport au deuxième support, ou inversement,
- le procédé comprend en outre une étape de fixation du premier support et du deuxième support par rapport au bâti, et/ou
- l'outillage comprend en outre au moins deux pions configurés pour pénétrer dans des cavités formées dans la cage et/ou dans le porte-cage, et l'étape de positionnement et de fixation de la cage et du porte-cage comprend en outre une sous-étape au cours de laquelle les pions sont introduits dans les cavités correspondantes afin d'indexer angulairement la cage et le porte-cage.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

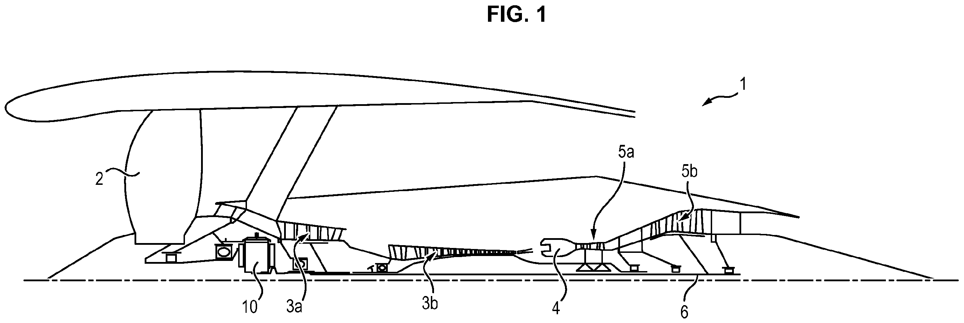

La figure 1 est une vue en coupe d'un exemple de réalisation d'une turbomachine comprenant un mécanisme de réduction entre la soufflante de l'arbre basse pression,

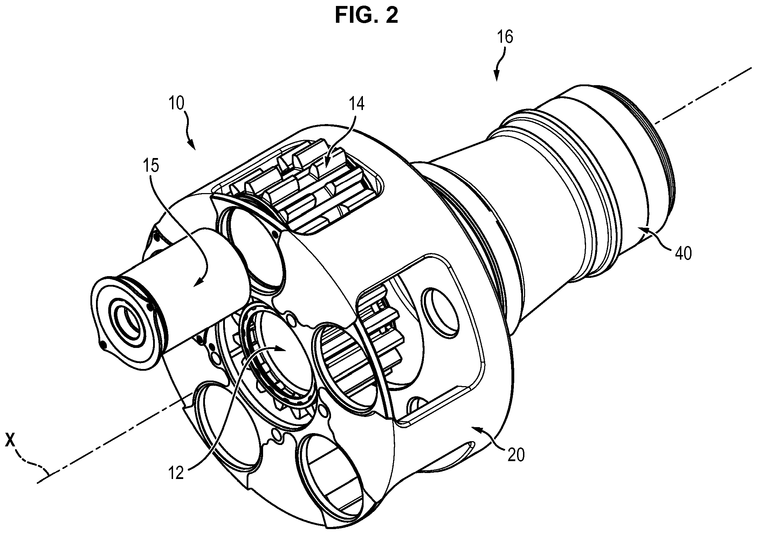

La figure 2 est une vue éclatée partielle et en perspective d'un exemple de porte-satellite pour un mécanisme de réduction, pouvant être assemblé à l'aide d'un procédé d'assemblage conforme à l'invention,
La figure 3 est une vue en détail d'un doigt du porte-cage du porte-satellite de la figure 2,
La figure 4 est une vue partielle de la cage du porte-satellite de la figure 2,
La figure 5 est une vue en coupe d'un doigt introduit entre un pontet interne et un pontet externe du porte-satellite de la figure 2,
La figure 6 est une vue en coupe du porte-satellite de la figure 2,
La figure 7 est un exemple de réalisation d'un outillage pouvant être utilisé dans un procédé d'assemblage conforme à l'invention,
La figure 8 est une vue en perspective d'une partie de l'outillage de la figure 7 positionné sur le porte-cage du porte-satellite de la figure 2, sur laquelle une portion a été coupée afin de visualiser des pions introduits dans une cavité préexistante,
La figure 9 est une vue en perspective partielle d'une partie de l'outillage de la figure 7 positionné sur la cage du porte-satellite de la figure 2,
La figure 10 est une vue en détail d'une cavité préexistante du porte-cage du porte-satellite de la figure 2, et

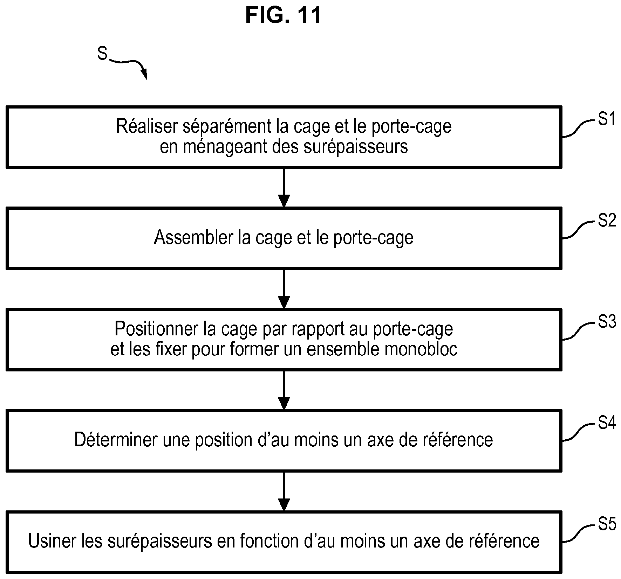

La figure 11 est un organigramme illustrant des étapes d'un procédé d'assemblage d'un porte-satellite pour un mécanisme de réduction conforme à l'invention.

### DESCRIPTION DETAILLEE D'UN MODE DE REALISATION

Dans ce qui suit, un procédé d'assemblage d'un porte-satellites 16 pour un mécanisme de réduction 10 du type épicycloïdal va à présent être décrit en référence aux figures annexées. Ceci n'est cependant pas limitatif, l'invention s'appliquant également à l'assemblage d'un porte-satellites 16 d'un mécanisme de réduction 10 du type planétaire.

Le porte-satellites 16 présente un axe de révolution X, configuré pour correspondre à l'axe de rotation d'un mécanisme de réduction 10 dans lequel il est destiné à être intégré.

Le porte-satellites 16 comprend en outre une cage 20 annulaire et un porte-cage 30 annulaire, fixés ensemble solidairement, ainsi qu'un arbre d'entrainement configuré pour être connecté à la soufflante.

La cage 20 comprend une première et une deuxième plateforme définissant ensemble un espace configuré pour recevoir un pignon solaire 12 central et des satellites 14. La première et la deuxième plateforme sont fixées par l'intermédiaire d'une série de montants 21 répartis circonférentiellement autour de l'axe de révolution X, chaque montant 21 comprenant un pontet interne 22 et un pontet externe 24. Un orifice traversant 23 est formé dans chaque pontet interne 22 et dans chaque pontet externe 24. Les orifices traversants 23, 25 des pontets 22, 24 d'un même montant 21 sont placés en regard de manière à définir un passage configuré pour recevoir un axe de connexion.

Des ouvertures sont formées dans la deuxième plateforme de la cage 20, entre le pontet interne 22 et le pontet externe 24 de chaque montant 21, afin de permettre la fixation de la cage 20 sur le porte-cage 30.

La cage 20 comprend en outre une série de portées de palier 26, formés dans la plateforme interne et dans la plateforme externe et définissant deux à deux des alésages 27 configurés pour recevoir chacun un palier 15 d'un satellite 14 associé.

Enfin, un alésage central 28, coaxial avec l'axe de révolution X, est formé dans la deuxième plateforme de la cage 20.

Le porte-cage 30 comprend une plateforme sensiblement annulaire sur laquelle sont fixés une série de doigts 31 axiaux répartis circonférentiellement autour de l'axe de révolution X. Chaque doigt 31 est configuré pour être inséré dans une ouverture associée formée dans la cage 20 afin de venir se loger entre un pontet interne 22 et un pontet externe 24 d'un montant 21 donné.

Un orifice traversant 32 est formé dans chaque doigt 31. Chaque orifice traversant 32 des doigts 31 est configuré pour venir en regard des orifices traversants 23, 25 du pontet interne 22 et du pontet externe 24 du montant 21 associé, sur le passage de l'axe de connexion, afin de permettre la fixation de la cage 20 sur le porte-cage 30 à l'aide de l'axe de connexion. Plus précisément, pour chaque montant 21 et pour chaque doigt 31, un axe de connexion est introduit dans les trois orifices traversants 23, 32, 25 en regard et fretté dans cette position sur le pontet interne 22 et sur le pontet externe 24.

Une rotule est en outre interposée entre chaque axe de connexion et le doigt 31 associé afin de former une liaison souple entre la cage 20 et le porte-cage 30. Pour cela, la rotule est frettée sur le doigt 31 et fixée par ajustement glissant sur l'axe de connexion associé.

Enfin, un alésage central 33, coaxial avec l'axe de révolution X, est formé dans la plateforme du porte-cage 30.

L'arbre 40 d'entrainement est fixé solidairement sur la plateforme du porte-cage 30 de sorte que l'arbre d'entrainement 40, l'alésage de la cage 20 et l'alésage du porte-cage 30 sont coaxiaux.

L'arbre 40 présente par ailleurs au moins une portée de roulement 41, généralement deux portées de roulement 41, 42. Ces portées de roulement 41, 42 sont, de manière connue en soi, parallèles à l'axe de rotation de l'arbre (qui est confondu avec l'axe de révolution X du porte-satellites 16).

Afin de réaliser un assemblage de la cage 20 et du porte-cage 30 (prééquipé de l'arbre d'entrainement) de manière robuste et précise, l'invention propose un procédé d'assemblage S comprenant les étapes suivantes :
(i) réaliser S1 séparément la cage 20 et le porte-cage 30 en ménageant une surépaisseur au niveau de l'un des éléments suivants : l'orifice traversant 23 du pontet interne 22 et l'orifice traversant 25 du pontet externe 24 d'au moins un montant 21 de la cage 20, ou l'orifice traversant 32 d'au moins un doigt 31 du porte-cage 30, et/ou au niveau de l'un des éléments suivants : au moins l'une des portées de palier 26 ou la ou les portées de roulement 41, 42,
(ii) assembler S2 la cage 20 et le porte-cage 30 en plaçant chaque doigt 31 axial du porte-cage 30 entre un pontet interne 22 et un pontet externe 24 de la cage 20,
(iii) positionner S3 la cage 20 par rapport au porte-cage 30 et fixer ensemble la cage 20 et le porte-cage 30 de manière à réaliser un ensemble monobloc,
(iv) déterminer S4 une position d'au moins un axe de référence Y1, Y2 lié à la cage 20, au porte-cage 30 et/ou à l'arbre et
(v) en tenant compte de la position de l'un au moins des axes de référence, usiner S5 tout ou partir des surépaisseurs de manière à assurer un alignement entre les orifices traversants 23, 25 de chaque pontet interne 22 et de chaque pontet externe 24 avec l'orifice traversant 32 du doigt 31 axial associé d'une part, et/ou des portées de palier 26 de la cage 20 avec la portée de roulement 41, 42 d'autre part.

Pour cela, au cours d'une première étape S1, la cage 20 et le porte-cage 30 sont réalisés séparément.

Au cours de cette étape S1, une surépaisseur est laissée (ou créée) au niveau d'une partie des orifices traversants 23, 25, des portées 26 des paliers.

Comme nous le verrons par la suite, ces surépaisseurs forment un surplus local de matière permettant une rectification ultérieure des orifices 23, 25 et des portées de palier 26 afin d'adapter leur forme, leur positionnement et leurs dimensions aux tolérances finales requises, en fonction notamment de la forme, du positionnement et des dimensions de l'orifice traversant 32 du doigt 31 et/ou des portées de roulement 41, 42.

Le cas échéant, l'orifice traversant 32 du doigt 31 (ou des doigts 31) et/ou les portées de roulement 41, 42 peuvent également présenter une surépaisseur formant un surplus local de matière. Leur rectification est cependant opérée avant l'étape S2 d'assemblage de la cage 20 et du porte-cage 30 de manière à leur conférer les dimensions, la forme et le positionnement conforme aux tolérances finales requises.

Par tolérances finales, on comprendra ici les tolérances visées à la fin du procédé d'assemblage S. Il peut s'agir des tolérances finales visées lors de l'assemblage des pièces avant l'étape (conventionnelle) de nitruration, ou des tolérances finales visées lors de leur assemblage définitif après l'étape de nitruration.

Au cours d'une deuxième étape S2, la cage 20 et le porte-cage 30 sont assemblés.

Pour cela, les doigts 31 du porte-cage 30 sont introduits dans l'ouverture associée formée dans la deuxième plateforme de la cage 20 afin d'amener chaque doigt 31 entre un pontet interne 22 et un pontet externe 24. La cage 20 et le porte-cage 30 sont alors rapprochés jusqu'à ce que les orifices traversants 23, 32, 25 associés du pontet externe 24, du doigt 31 et du pontet interne 22 soient globalement alignés.

Au cours d'une troisième étape S3, la cage 20 est positionnée par rapport au porte-cage 30, puis la cage 20 et le porte-cage 30 sont fixés ensemble dans cette position de manière à réaliser un ensemble monobloc.

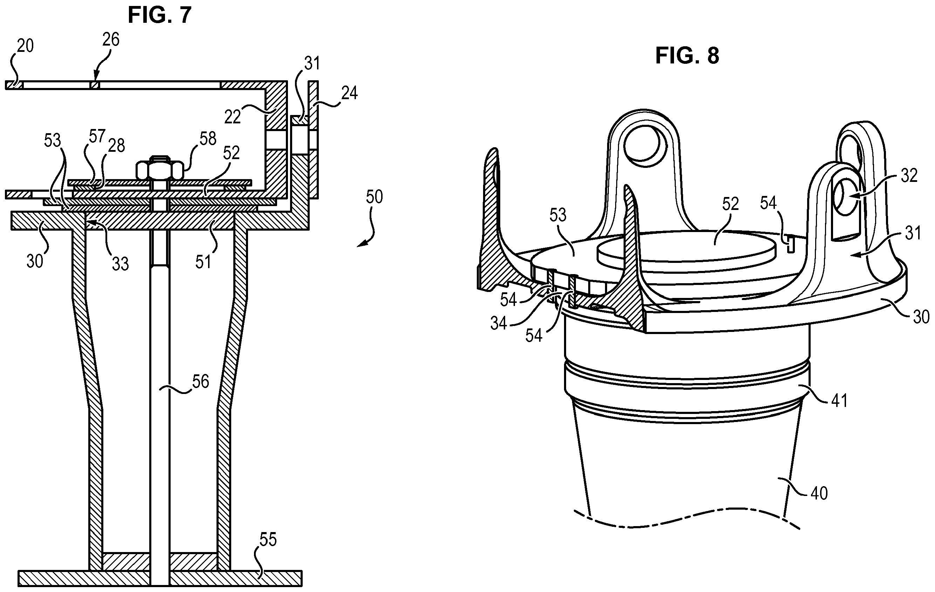

Par exemple, la cage 20 et le porte-cage 30 peuvent être fixés sur un même outillage 50. Un exemple d'outillage 50 adapté a été illustré en figures 7 à 9. On notera qu'il ne s'agit que d'un ouillage proposé à titre non limitatif, et que d'autres outillages 50 peuvent être mis au point pour mettre en œuvre la troisième étape S3.

Ici, l'outillage 50 comprend un premier support 51 configuré pour être introduit avec ajustement sans jeu dans l'alésage central du porte-cage 30 et un deuxième support configuré pour être introduit avec ajustement dans l'alésage central de la cage 20.

Le premier support 51 comprend une première galette 51 de forme cylindrique de révolution dont le diamètre externe est sensiblement égal au diamètre interne de l'alésage central du porte-cage 30. Cette première galette 51 est configurée pour se loger avec ajustement dans l'alésage central 33 afin de venir en contact continu avec ses parois, de sorte que la position de la galette permet de déterminer avec précision la position du porte-cage 30.

Afin d'obtenir l'ajustement entre le premier support 51 et les parois de l'alésage central 33, le premier support 51 peut être rectifié afin d'adapter sa configuration (forme, dimensions et orientation) à celle de l'alésage central 33. Pour cela, les parois de l'alésage central 33 peuvent notamment être palpées (tout autre méthode de métrologie tridimensionnelle pouvant bien entendu être envisagée) après rectification afin d'en déterminer la forme, les dimensions et l'orientation avec précision.

Après cette étape de rectification, la première galette 51 du premier support 51 et l'alésage central 33 s'emboîtent alors parfaitement.

Le deuxième support 52 comprend également une deuxième galette 52 de forme cylindrique de révolution dont le diamètre externe est sensiblement égal au diamètre interne de l'alésage central 28 de la cage 20 afin de se loger avec ajustement dans ledit alésage central 28 pour déterminer avec précision la position de la cage 20.

De manière analogue au premier support 51 la deuxième galette 52 peut être rectifiée afin d'obtenir un emboîtement parfait des deux pièces.

On notera que la rectification des supports 51, 52 permet, en plus d'assurer un assemblage parfait de l'outillage 50 avec la cage 20 et le porte-cage 30, d'améliorer la robustesse du procédé S en assurant une continuité du dimensionnement des alésages centraux 28, 33 de la cage 20 et du porte-cage 30.

De plus, cette configuration de l'outillage 50 permet de laisser un accès à toutes les parties de la cage 20 et du porte-cage 30, notamment lors des opérations d'usinage. Un contrôle de la dimension et de la forme des supports 51, 52 peut ensuite être réalisé pour permettre d'éventuelles reprises.

Le premier support 51 est de préférence fixé sur le deuxième support 52 de manière à garantir une hauteur déterminée entre la cage 20 et le porte-cage 30. Par exemple, des galettes supplémentaires 53 d'épaisseur adaptée peuvent être interposées afin d'ajuster ladite hauteur. Ces galettes 53 permettent ainsi d'ajuster la distance entre l'alésage central 33 du porte-cage 30 et l'alésage central 28 de la cage 20 lors du positionnement et de la fixation du porte-cage 30 et de la cage 20.

Le premier et le deuxième support 51, 52 peuvent alors être introduits dans l'alésage central 33, 28 correspondant et assurent ainsi un alignement axial (suivant l'axe de révolution X du porte-satellites 16) et radial de l'alésage central 28 de la cage 20 avec l'alésage central 33 du porte-cage 30.

Afin d'ajuster la position angulaire de la cage 20 par rapport au porte-cage 30 et de garantir leur concentricité, l'outillage 50 peut en outre comprendre des organes d'indexation angulaires 54. Par exemple, l'outillage 50 peut comprendre deux pions 54, à savoir au moins un pion 54 pour la cage 20 et au moins un pion 54 pour le porte-cage 30, s'étendant depuis le premier support 51 et/ou le deuxième support 52 et configurés pour coopérer avec autant de cavités 29, 34 formées dans la cage 20 et dans le porte-cage 30 de sorte que, lors de l'assemblage de la cage 20 et/ou du porte-cage 30, les pions 54 pénètrent dans les cavités 29, 34 et corrigent ainsi l'orientation relative de la cage 20 et du porte-cage 30. Le diamètre des pions 54 est adapté au diamètre des cavités 29, 34 pour réaliser un montage sans jeu et permettre la répétabilité du montage.

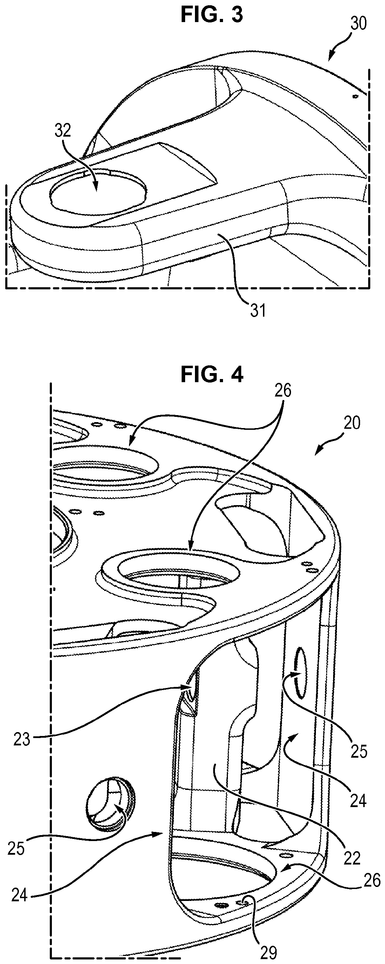

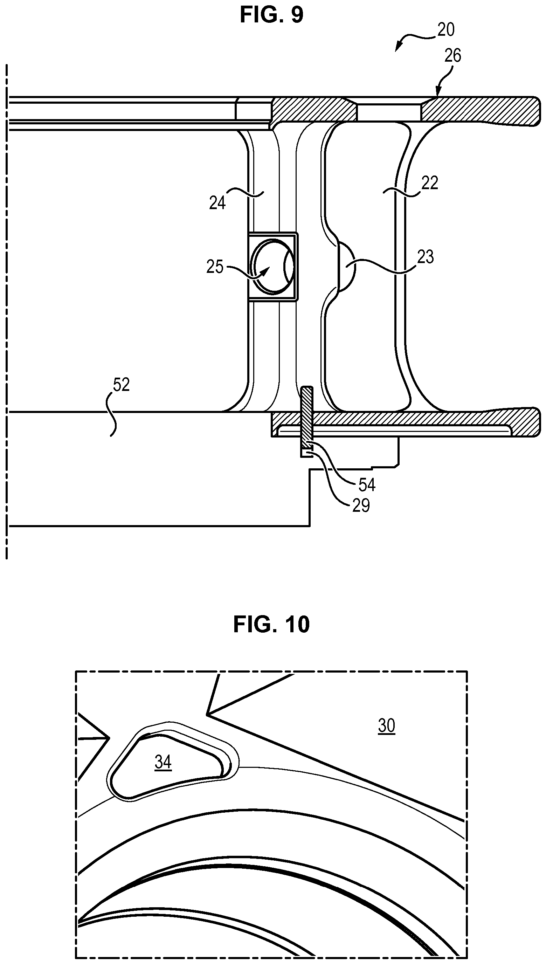

De préférence, des cavités préexistantes 29, 34 dans la cage 20 et dans le porte-cage 30 sont utilisées, par exemple un trou 29 configuré pour recevoir une goupille formée dans la cage 20 à proximité de son alésage central 28, ou encore deux sommets d'un trou 34 sensiblement triangulaire formé à proximité de l'alésage central 33 du porte-cage 30. Dans le cas de l'utilisation de ces exemples de cavités 29, 34, le premier support 51 comprend alors deux pions 54 (voir figure 8), configurés pour pénétrer dans le trou 34 au niveau de ses deux sommets, tandis que le deuxième support 52 comprend un pion 54 configuré pour pénétrer dans le trou 29 de la cage 20 (voir figures 4 et 9).

Afin de bloquer en position la cage 20 et le porte-cage 30, le premier support 51 et le deuxième support 52 sont ensuite immobilisés par rapport à un bâti 55, par exemple une table de montage. Pour cela, dans une forme de réalisation, l'outillage 50 peut être monté fixe par rapport au bâti 55.

Par exemple, l'outillage 50 peut comprendre une tige 56, fixée sur le bâti 55 et comprenant une extrémité libre filetée, ainsi qu'une plaque 57 configurée pour être enfilée sur la tige 56. La tige 56 s'étend suivant une direction sensiblement perpendiculairement au bâti 55 et présente une longueur supérieure à une longueur de l'arbre 40 suivant l'axe de révolution X.

Le porte-cage 30 peut alors être posé sur le bâti 55 par l'intermédiaire de l'arbre 40, de sorte que la tige 56 s'étende de manière sensiblement coaxiale avec son axe de rotation. La longueur de la tige 56 est choisie de sorte que, dans cette configuration, son extrémité libre fait saillie de l'alésage central 33 du porte-cage 30. Le premier support 51 est ensuite enfilé sur la tige 56 et emboîté dans l'alésage central 33 du porte-cage 30. Le cas échéant, les pions 54 du premier support 51 sont insérés dans une cavité 34 associée formée dans le porte-cage 30 afin d'indexer angulairement le premier support 51, par exemple dans le trou triangulaire 34. Le premier support 51 est en outre placé sur la tige 56 de manière à affleurer la surface de la plateforme.

Les galettes supplémentaires 53 sont ensuite enfilées successivement sur la tige 56 jusqu'à atteindre une hauteur égale à l'espacement voulu entre la cage 20 et le porte-cage 30. Afin de permettre l'immobilisation de l'outillage 50, la galette supplémentaire 53 en contact avec le premier support 51 est dimensionnée de manière à venir en appui contre la plateforme du porte-cage 30 de manière à former une butée.

Le deuxième support 52 est ensuite enfilé sur la tige 56, coaxialement avec le premier support 51, puis la cage 20 est emboîtée sur le premier support 51. Le cas échéant, le pion 54 du deuxième support 52 est inséré dans une cavité associée 29 formée dans le porte-cage 30, par exemple dans le trou 29, afin de positionner angulairement la cage 20 par rapport au porte-cage 30, par l'intermédiaire du deuxième support 52 et du premier support 51. A ce stade, la cage 20 et le porte-cage 30 sont parfaitement coaxiaux.

Enfin, la plaque 57 peut être enfilée par-dessus le deuxième support 52 et appliquée contre la cage 20, puis un écrou 58 peut être vissé sur l'extrémité libre de la tige 56 de manière à serrer la plaque 57 contre la cage 20 afin d'immobiliser l'ensemble par rapport au bâti 55.

Dans une forme de réalisation, le premier support 51, la galette supplémentaire 53 et le deuxième support 52 sont monoblocs, par exemple formés intégralement et en une seule pièce. Le premier support 51, la galette supplémentaire 53 et le deuxième support 52 sont alors placés en même temps entre le porte-cage 30 et la cage 20.

Le premier support 51 et le deuxième support 52 sont alors frettés dans cette position.

La cage 20 et le porte-cage 30 sont donc positionnés avec précision l'un par rapport à l'autre à l'aide de l'outillage 50 et sont alignés axialement, radialement et angulairement. Ils forment en outre, avec l'outillage 50, un ensemble monobloc, ce qui permet de réaliser la cotation de l'une des pièces (par exemple la cage 20) par rapport à l'autre des pièces (par exemple le porte-cage 30), ce qui simplifie grandement leur usinage. Leur positionnement et leur alignement est ensuite contrôlé.

Au cours d'une quatrième étape S4, la position d'au moins un axe de référence Y1, Y2, par exemple de deux axes de référence, est alors déterminée. Cette position peut notamment être réalisée dans l'un quelconque parmi le référentiel de l'outillage 50, le référentiel de la cage 20 ou le référentiel du porte-cage 30, dans la mesure où ces trois référentiels sont à présent confondus grâce à la troisième étape S3 de positionnement et de fixation.

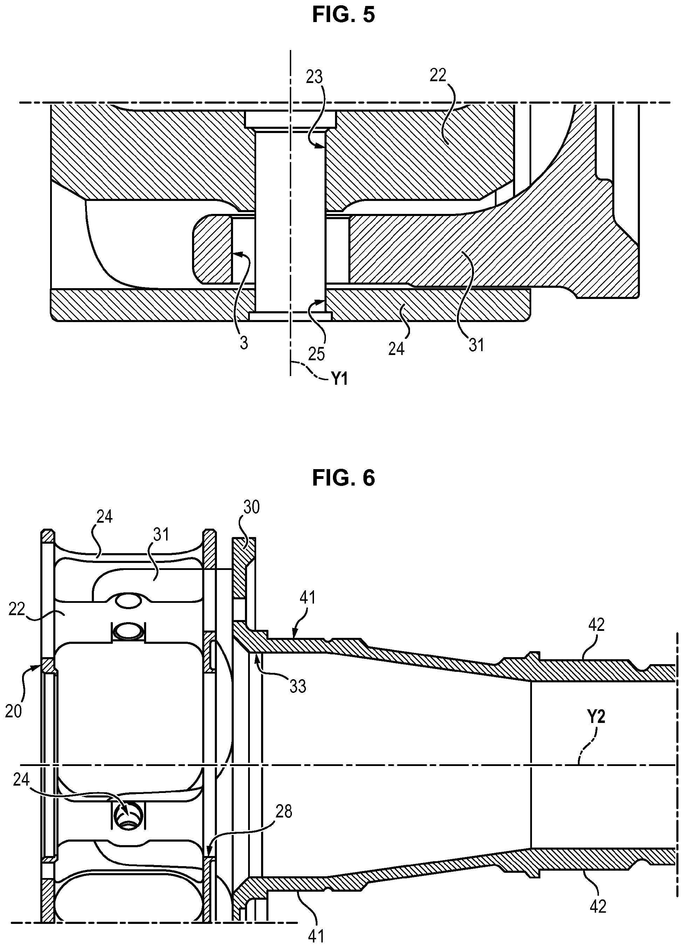

Dans une première forme de réalisation, l'axe de référence correspond à un axe de révolution Y1 de l'orifice traversant 32 du doigt 31 qui ne présente pas de surépaisseur (voir figure 5). On rappelle en effet que cet orifice traversant 23 a été usiné aux tolérances finales requises.

La position de l'axe de révolution Y1 de l'orifice traversant 23 peut être déterminée par métrologie tridimensionnelle, par exemple par palpation de l'orifice traversant 23 et application de la méthode des moindres carrés aux mesures ainsi obtenues.

Dans une deuxième forme de réalisation, l'axe de référence est un axe de roulement Y2 et correspond à l'axe commun formé par les portées de roulement 41, 42 (voir figure 5). Ici encore, l'axe de roulement Y2 peut être déterminé par métrologie tridimensionnelle, et notamment par palpation d'au moins l'une des portées de roulement 41, 42 sur tout ou partie de la circonférence de l'arbre 40 et application de la méthode des moindres carrés aux mesures ainsi obtenues. De préférence l'axe de roulement Y2 est déterminé à partir des deux portées de roulement 41, 42.

Dans ce qui suit, le procédé S va être décrit dans le cas où à la fois l'axe de révolution Y1 de l'orifice traversant 23 et l'axe de roulement Y2 sont déterminés. Ceci n'est cependant pas limitatif, l'invention s'appliquant également dans le cas où seul l'un de ces axes Y1, Y2 est déterminé, notamment lorsque seuls les orifices traversants 23, 25 des montants 21 sont rectifiés (auquel cas l'axe de référence correspond à l'axe de révolution de l'orifice traversant 32 d'un doigt 31) ou lorsque seules les portées de palier 26 sont rectifiées (auquel cas l'axe de référence correspond à l'axe de roulement Y2).

Au cours d'une cinquième étape S5, les surépaisseurs restantes au niveau des orifices traversants 23, 25 et des portées de palier 26 sont usinées.

Pour un montant 21 donné, l'usinage des surépaisseurs des orifices traversants 23, 25 de chaque pontet interne 22 et de chaque pontet externe 24 est réalisé en tenant compte de l'axe de révolution Y1 de l'orifice traversant 32 du doigt 31 associé. On rappelle en effet que l'orifice traversant 32 du doigt 31 est déjà rectifié (première étape S1) et respecte les tolérances finales requises, de sorte que la rectification des orifices traversants 23, 25 des pontets 22, 24 peut être réalisée avec précision, partant de son axe de révolution Y1. On notera que, dans cette forme de réalisation, un axe de référence (l'axe de révolution Y1) est déterminé pour chaque orifice traversant 23 de chaque doigt 31, de sorte que l'orifice traversant 23 des pontets interne et externe 22, 24 sont rectifiés en fonction d'un axe de référence dédié.

En variante, tous les orifices traversants 23, 25 des montants 21 peuvent être usinés en fonction d'un seul axe de référence correspondant à l'axe de révolution Y1 d'un seul des doigts 31. Dans ce cas, il est possible de ne palper que l'un des orifices traversants 32 des doigts 31 au cours de la troisième étape S3 du procédé S. Par ailleurs, une surépaisseur peut être ménagée au cours de la première étape S1 au niveau des orifices traversants 23, 25 des autres doigts 31, ces surépaisseurs étant ensuite usinées au cours de la cinquième étape S5 en tenant compte de la position de l'axe de référence Y1 afin de rectifier les autres orifices traversants 32.

De manière analogue, pour une portée de palier 26 donnée, l'usinage de la surépaisseur associée est réalisé en tenant compte de l'axe de roulement Y2 des portées de roulement 41, 42. On rappelle en effet que les portées de roulement 41, 42 sont déjà rectifiées (première étape S1) et respectent les tolérances finales requises, de sorte que la rectification des portées de palier 26 peut être réalisée avec précision, partant de l'axe de roulement Y2. On notera qu'ici un seul axe de référence (l'axe de roulement Y2) est utilisé pour rectifier toutes les portées de palier 26.

## Revendications

1. Procédé d'assemblage (S) d'un porte-satellites (16), ledit porte-satellites (16) présentant un axe de révolution (X) et comprenant :
- une cage (20) annulaire comprenant :
- une série de montants (21) répartis circonférentiellement autour de l'axe de révolution (X), chaque montant (21) comprenant un pontet interne (22) et un pontet externe (24) dans chacun desquels est formé un orifice traversant (23, 25),
- des portées de palier définissant des alésages configurés pour recevoir un palier d'un satellite,
- un porte-cage (30) annulaire comprenant :
- une série de doigts (31) axiaux répartis circonférentiellement autour de l'axe de révolution (X) dans chacun desquels est formé un orifice traversant (32), chaque doigt (31) axial étant configuré pour être logé entre le pontet interne (22) et le pontet externe (24) d'un montant (21) de la cage (20),
- un arbre (40) coaxial avec l'axe de révolution (X) et présentant au moins une portée de roulement (41, 42), ledit arbre (40) étant fixé sur le porte-cage (30),
le procédé d'assemblage (S) étant **caractérisé en ce qu'**il comprend les étapes suivantes :
- réaliser (S1) séparément la cage (20) et le porte-cage (30) en ménageant une surépaisseur au niveau de l'un des éléments suivants : l'orifice traversant (23) du pontet interne (22) et l'orifice traversant (25) du pontet externe (24) d'au moins un montant (21) de la cage (20), ou l'orifice traversant (32) d'au moins un doigt (31) du porte-cage (30), et/ou au niveau de l'un des éléments suivants : au moins une portée de palier (26) ou l'au moins une portée de roulement (41, 42),
- assembler (S2) la cage (20) et le porte-cage (30) en plaçant chaque doigt (31) axial du porte-cage (30) entre un pontet interne (22) et un pontet externe (24) de la cage (20),
- positionner (S3) la cage (20) par rapport au porte-cage (30) et fixer ensemble la cage (20) et le porte-cage (30) de manière à réaliser un ensemble monobloc,
- déterminer (S4) une position d'au moins un axe de référence (Y1, Y2) lié à la cage (20), au porte-cage (30) et/ou à l'arbre (40) et
- en tenant compte de la position de l'un au moins des axes de référence (Y1, Y2), usiner (S5) tout ou partir des surépaisseurs de manière à assurer un alignement entre les orifices traversants de chaque pontet interne (22) et de chaque pontet externe (24) avec l'orifice traversant (23, 25) du doigt (31) axial associé d'une part, et/ou des portées de palier (26) de la cage (20) avec la portée de roulement (41, 42) d'autre part.

2. Procédé d'assemblage (S) selon la revendication 1, dans lequel, au cours de l'étape (S1) de réalisation de la cage (20) et du porte-cage (30), la surépaisseur est ménagée au niveau de l'orifice traversant (23, 25) du pontet interne (22) et du pontet externe (24) et/ou au niveau des portées de palier (26), l'orifice traversant (32) des doigts (31) axiaux et l'au moins une portée de roulement (41, 42) étant dépourvus de surépaisseur.

3. Procédé d'assemblage (S) selon la revendication 2, dans lequel les axes de référence (Y1, Y2) comprennent un axe de révolution (Y1) de l'orifice traversant (32) d'au moins un doigt (31) axial du porte-cage (30) et/ou un axe de roulement (Y1), ledit axe de roulement (Y2) étant défini comme un axe de symétrie de l'au moins une portée de roulement (41, 42) de l'arbre (40).

4. Procédé d'assemblage (S) selon la revendication 3, dans lequel l'axe de révolution (Y1) et l'axe de roulement (Y2) sont déterminés par métrologie tridimensionnelle de l'orifice traversant (32) du doigt (31) axial et de l'au moins une portée de roulement (41, 42), respectivement, par exemple par palpage.

5. Procédé d'assemblage (S) selon l'une des revendications 1 à 4, dans lequel la cage (20) et le porte-cage (30) comprennent chacun un alésage central (28, 33), lesdits alésages centraux (28, 33) étant coaxiaux avec l'axe de révolution (X) du porte-satellites (16), et dans lequel l'étape d'assemblage (S2) comprend une sous-étape au cours de laquelle la cage (20) et le porte-cage (30) sont positionnés de manière à aligner axialement et radialement leur alésage central (28, 33) et/ou à les indexer angulairement.

6. Procédé d'assemblage (S) selon la revendication 5, dans lequel l'étape d'assemblage (S2) de la cage (20) et du porte-cage (30) est réalisée par introduction d'un outillage (50) dans l'alésage central (28, 33) de la cage (20) et du porte-cage (30) et fixation dudit outillage (50) dans lesdits alésages centraux (28, 33) de manière à bloquer la cage (20) et le porte-cage (30) par rapport à un bâti fixe (55).

7. Procédé d'assemblage (S) selon la revendication 6, dans lequel l'outillage comprend :
- un premier support (51) configuré pour être introduit avec ajustement dans l'alésage central (33) du porte-cage (30) et
- un deuxième support (52) configuré pour être introduit avec ajustement dans l'alésage central (28) de la cage (20),
dans lequel l'étape (S3) de positionnement et de fixation de la cage (20) et du porte-cage (30) comprend les sous-étapes suivantes :
(i) déterminer les dimensions de l'alésage central (28) de la cage (20) et de l'alésage central (33) du porte-cage (30),
(ii) usiner le premier support (51) et le deuxième support (52) en fonction des dimensions déterminées de l'alésage central (28, 33) de la cage (20) et du porte-cage (30) de manière à assurer un assemblage ajusté desdits supports (51, 52) avec l'alésage central (28, 33) correspondant,
(iii) introduire le premier support (51) et le deuxième support (52) dans l'alésage central (28) du porte-cage (30) et dans l'alésage central (33) de la cage (20), respectivement, et
(iv) bloquer la cage (20) et le porte-cage (30) de manière à les rendre monobloc en fixant le premier support (51) par rapport au deuxième support (52), ou inversement.

8. Procédé d'assemblage (S) selon la revendication 7, comprenant en outre une étape de fixation du premier support (51) et du deuxième support (52) par rapport au bâti (55).

9. Procédé d'assemblage (S) selon l'une des revendications 6 à 8, dans lequel l'outillage (50) comprend en outre au moins deux pions (54) configurés pour pénétrer dans des cavités (29, 34) formées dans la cage (20) et/ou dans le porte-cage (30), et l'étape (S3) de positionnement et de fixation de la cage (20) et du porte-cage (30) comprend en outre une sous-étape au cours de laquelle les pions (54) sont introduits dans les cavités (29, 34) correspondantes afin d'indexer angulairement la cage (20) et le porte-cage (30).

## Patentansprüche

1. Verfahren zur Montage (S) eines Planetenträgers (16), wobei der Planetenträger (16) eine Drehachse (X) aufweist und umfasst:
- einen ringförmigen Käfig (20), umfassend:
- eine Reihe von Pfosten (21), die umfangsmäßig um die Drehachse (X) verteilt sind, wobei jeder Pfosten (21) eine innere Brücke (22) und eine äußere Brücke (24) umfasst, in denen jeweils eine Durchgangsöffnung (23, 25) ausgebildet ist,
- Lagersitze, die Bohrungen definieren, die ausgelegt sind, um ein Lager eines Planeten aufzunehmen,
- einen ringförmigen Käfigträger (30), umfassend:
- eine Reihe axialer Finger (31), die umfangsmäßig um die Drehachse (X) verteilt sind, in denen jeweils eine Durchgangsöffnung (32) ausgebildet ist, wobei jeder axiale Finger (31) ausgelegt ist, um zwischen der inneren Brücke (22) und der äußeren Brücke (24) eines Pfostens (21) des Käfigs (20) untergebracht zu sein,
- eine mit der Drehachse (X) koaxiale Welle (40) und aufweisend mindestens einen Wälzlagersitz (41, 42), wobei die Welle (40) auf dem Käfigträger (30) befestigt ist,
wobei das Montageverfahren (S) **dadurch gekennzeichnet ist, dass** es die folgenden Schritte umfasst:
- separates Herstellen (S1) des Käfigs (20) und des Käfigträgers (30) durch Einrichten einer Verdickung im Bereich von einem der folgenden Elemente: der Durchgangsöffnung (23) der inneren Brücke (22) und der Durchgangsöffnung (25) der äußeren Brücke (24) von mindestens einem Pfosten (21) des Käfigs (20) oder der Durchgangsöffnung (32) von mindestens einem Finger (31) des Käfigträgers (30) und/oder im Bereich von dem einem der folgenden Elemente: mindestens einem Lagersitz (26) oder mindestens einem Wälzlagersitz (41, 42),
- Verbinden (S2) des Käfigs (20) und des Käfigträgers (30) durch Platzieren jedes axialen Fingers (31) des Käfigträgers (30) zwischen einer inneren Brücke (22) und einer äußeren Brücke (24) des Käfigs (20),
- Positionieren (S3) des Käfigs (20) in Bezug auf den Käfigträger (30) und gemeinsames Befestigen des Käfigs (20) und des Käfigträgers (30) derart, dass eine einteilige Einheit hergestellt wird,
- Bestimmen (S4) einer Position von mindestens einer mit dem Käfig (20), dem Käfigträger (30) und/oder der Welle (40) verbundenen Referenzachse (Y1, Y2) und
- unter Berücksichtigung der Position von mindestens einer der Referenzachsen (Y1, Y2), Bearbeiten (S5) der Verdickungen ganz oder teilweise derart, dass die Durchgangsöffnungen jeder inneren Brücke (22) und jeder äußeren Brücke (24) mit der Durchgangsöffnung (23, 25) des zugeordneten axialen Fingers (31) zum einen und/oder der Lagersitze (26) des Käfigs (20) mit dem Wälzlagersitz (41, 42) zum anderen ausgerichtet sind.

2. Montageverfahren (S) nach Anspruch 1, wobei während des Herstellungsschritts (S1) des Käfigs (20) und des Käfigträgers (30) die Verdickung im Bereich der Durchgangsöffnung (23, 25) der inneren Brücke (22) und der äußeren Brücke (24) und/oder im Bereich der Lagersitze (26) eingerichtet wird, wobei die Durchgangsöffnung (32) der axialen Finger (31) und des mindestens einen Wälzlagersitzes (41, 42) ohne Verdickung sind.

3. Montageverfahren (S) nach Anspruch 2, wobei die Referenzachsen (Y1, Y2) eine Drehachse (Y1) der Durchgangsöffnung (32) mindestens eines axialen Fingers (31) des Käfigträgers (30) und/oder eine Wälzlagerachse (Y1) umfassen, wobei die Wälzlagerachse (Y2) als eine Symmetrieachse des mindestens einen Wälzlagersitzes (41, 42) der Welle (40) definiert ist.

4. Montageverfahren (S) nach Anspruch 3, wobei die Drehachse (Y1) und die Wälzlagerachse (Y2) durch dreidimensionale Metrologie der Durchgangsöffnung (32) des axialen Fingers (31) und des mindestens einen Wälzlagersitzes (41, 42) jeweils beispielsweise durch Abtasten bestimmt werden.

5. Montageverfahren (S) nach einem der Ansprüche 1 bis 4, wobei der Käfig (20) und der Käfigträger (30) jeweils eine zentrale Bohrung (28, 33) umfassen, wobei die zentralen Bohrungen (28, 33) koaxial mit der Drehachse (X) des Planetenträgers (16) sind, und wobei der Montageschritt (S2) einen Unterschritt umfasst, bei dem der Käfig (20) und der Käfigträger (30) derart positioniert werden, dass ihre zentrale Bohrung (28, 33) axial und radial ausgerichtet sind und/oder sie winkelmäßig indexiert werden.

6. Montageverfahren (S) nach Anspruch 5, wobei der Montageschritt (S2) des Käfigs (20) und des Käfigträgers (30) durch Einführen eines Werkzeugs (50) in die zentrale Bohrung (28, 33) des Käfigs (20) und des Käfigträgers (30) und Befestigen des Werkzeugs (50) in den zentralen Bohrungen (28, 33) derart durchgeführt wird, dass der Käfig (20) und der Käfigträger (30) in Bezug auf ein festes Gestell (55) arretiert werden.

7. Montageverfahren (S) nach Anspruch 6, wobei das Werkzeug umfasst:
- einen ersten Halter (51), der ausgelegt ist, um ausgerichtet in die zentrale Bohrung (33) des Käfigträgers (30) eingeführt zu werden, und
- einen zweiten Halter (52), der ausgelegt ist, um ausgerichtet in die zentrale Bohrung (28) des Käfigs (20) eingeführt zu werden,
wobei der Positionierungs- und Befestigungsschritt (S3) des Käfigs (20) und des Käfigträgers (30) die folgenden Unterschritte umfasst:
(i) Bestimmen der Abmessungen der zentralen Bohrung (28) des Käfigs (20) und der zentralen Bohrung (33) des Käfigträgers (30),
(ii) Bearbeiten des ersten Halters (51) und des zweiten Halters (52) in Abhängigkeit von den bestimmten Abmessungen der zentralen Bohrung (28, 33) des Käfigs (20) und des Käfigträgers (30), so dass eine ausgerichtete Montage der Halter (51, 52) mit der entsprechenden zentralen Bohrung (28, 33) gesichert wird,
(iii) Einführen des ersten Halters (51) und des zweiten Halters (52) jeweils in die zentrale Bohrung (28) des Käfigträgers (30) und in die zentrale Bohrung (33) des Käfigs (20) und
(iv) Arretieren des Käfigs (20) und des Käfigträgers (30), so dass sie einteilig werden, durch Befestigen des ersten Halters (51) in Bezug auf den zweiten Halter (52) oder umgekehrt.

8. Montageverfahren (S) nach Anspruch 7, umfassend ferner einen Befestigungsschritt des ersten Halters (51) und des zweiten Halters (52) in Bezug auf das Gestell (55).

9. Montageverfahren (S) nach einem der Ansprüche 6 bis 8, wobei das Werkzeug (50) ferner mindestens zwei Zapfen (54) umfasst, die ausgelegt sind, um in Hohlräume (29, 34) einzudringen, die im Käfig (20) und/oder im Käfigträger (30) ausgebildet sind, und der Positionierungs- und Befestigungsschritt (S3) des Käfigs (20) und des Käfigträgers (30) ferner einen Unterschritt umfasst, bei dem die Zapfen (54) in die entsprechenden Hohlräume (29, 34) eingeführt werden, um den Käfig (20) und den Käfigträger (30) winkelmäßig zu indexieren.

## Claims

1. Method for assembling (S) a planet carrier (16), said planet carrier (16) having an axis of revolution (X) and comprising:
- an annular cage (20) comprising:
- a series of posts (21) distributed circumferentially around the axis of revolution (X), each post (21) comprising an internal saddle (22) and an external saddle (24) in each of which is formed a through opening (23, 25),
- bearing seats defining bores configured to receive a bearing of a planet gear,
- an annular cage carrier (30) comprising:
- a series of axial fingers (31) distributed circumferentially around the axis of revolution (X) in each of which is formed a through opening (32), each axial finger (31) being configured to be accommodated between the internal saddle (22) and the external saddle (24) of a post (21) of the cage (20),
- a shaft (40) coaxial with the axis of revolution (X) and having at least one rolling seat (41, 42), said shaft (40) being attached to the cage carrier (30),
the assembly method (S) being **characterized in that** it comprises the following steps:
- separately producing (S1) the cage (20) and the cage carrier (30) while providing excess thickness at one of the following elements: the through opening (23) of the internal saddle (22) and the through opening (25) of the external saddle (24) of at least one post (21) of the cage (20) or the through opening (32) of at least one finger (31) of the cage carrier (30) and/or at one of the following elements: at least one bearing seat (26) or the at least one rolling seat (41, 42),
- assembling (S2) the cage (20) and the cage carrier (30) by placing each axial finger (31) of the cage carrier (30) between an internal saddle (22) and an external saddle (24) of the cage (20),
- positioning (S3) the cage (20) with respect to the cage carrier (30) and attaching together the cage (20) and the cage carrier (30) so as to achieve a single-piece assembly,
- determining (S4) a position of at least one reference axis (Y1, Y2) linked to the cage (20), to the cage carrier (30) and/or to the shaft (40) and
- while taking into account the position of at least one of the reference axes (Y1, Y2), machining (S5) all or part of the excess thicknesses so as to ensure alignment between the through openings of each internal saddle (22) and of each external saddle (24) with the through opening (23, 25) of the associated axial finger (31) on the one hand, and/or of the bearing seats (26) of the cage (20) with the rolling seat (41, 42) on the other hand.

2. The assembly method (S) according to claim 1, wherein, during the step (S1) of producing the cage (20) and the cage carrier (30), the excess thickness is provided at the through opening (23, 25) of the internal saddle (22) and of the external saddle (24) and/or at the bearing seats (26), the through opening (32) of the axial fingers (31) and the at least one rolling seat (41, 42) being free of excess thickness.

3. The assembly method (S) according to claim 2, in which the reference axes (Y1, Y2) comprise an axis of revolution (Y1) of the through opening (32) of at least one axial finger (31) of the cage carrier (30) and/or a rolling axis (Y1), said rolling axis (Y2) being defined as an axis of symmetry of the at least one rolling seat (41, 42) of the shaft (40).

4. The assembly method (S) according to claim 3, wherein the axis of revolution (Y1) and the rolling axis (Y2) are determined by three-dimensional metrology of the through opening (32) of the axial finger (31) and of the at least one rolling seat (41, 42), respectively, for example by tracing.

5. The assembly method (S) according to one of claims 1 to 4, wherein the cage (20) and the cage carrier (30) each comprise a central bore (28, 33), said central bores (28, 33) being coaxial with the axis of revolution (X) of the planet carrier (16), and in which the step of assembly (S2) comprises a sub-step during which the cage (20) and the cage carrier (30) are positioned so as to align axially and radially their central bore (28, 33) and/or to index them angularly.

6. The assembly method (S) according to claim 5, wherein the step of assembling (S2) the cage (20) and the cage carrier (30) is accomplished by the introduction of a set of tools (50) into the central bore (28, 33) of the cage (20) and of the cage carrier (30) and the attachment of said set of tools (50) in said central bores (28, 33) so as to block the cage (20) and the cage carrier (30) with respect to a fixed frame (55).

7. The assembly method (S) according to claim 6, in which the set of tools comprises:
- a first support (51) configured to be introduced with adjustment into the central bore (33) of the cage carrier (30) and
- a second support (52) configured to be introduced with adjustment into the central bore (28) of the cage (20),
wherein the step (S3) of positioning and of attachment of the cage (20) and of the cage carrier (30) comprises the following sub-steps:
(i) determining the dimensions of the central bore (28) of the cage (20) and of the central bore (33) of the cage carrier (30),
(ii) machining the first support (51) and the second support (52) depending on the determined dimensions of the central bore (28, 33) of the cage (20) and of the cage carrier (30) so as to ensure an adjusted assembly of said supports (51, 52) with the corresponding central bore (28, 33),
(iii) introducing the first support (51) and the second support (52) into the central bore (28) of the cage carrier (30) and into the central bore (33) of the cage (20) respectively, and
(iv) blocking the cage (20) and the cage carrier (30) so as to make them single-piece by fixing the first support (51) with respect to the second support (52), or conversely.

8. The assembly method (S) according to claim 7, also comprising a step of fixing the first support (51) and the second support (52) with respect to the frame (55).

9. The assembly method (S) according to one of claims 6 to 8, wherein the set of tools (50) also comprises at least two pins (54) configured to penetrate into cavities (29, 34) formed in the cage (20) and/or in the cage carrier (30), and the step (S3) of positioning and of attachment of the cage (20) and of the cage carrier (30) also comprises a sub-step during which the pins (54) are introduced into the corresponding cavities (29, 34) so as to angularly index the cage (20) and the cage carrier (30).
